# EUROPÄISCHE PATENTSCHRIFT

(11) **EP 0 379 689 B1**
(45) Veröffentlichungstag und Bekanntmachung des Hinweises auf die Patenterteilung: **10.03.1993**
(21) Anmeldenummer: 89122918.9
(22) Anmeldetag: 12.12.1989
(51) Int. Cl.: F16F 1/36, B29C 33/48

(54) **Flächenlager und Verfahren zu seiner Herstellung**
Flat plate mount and method for its manufacture
Support plat et son procédé de fabrication

(30) Priorität: 23.01.1989 DE 3901898
(43) Veröffentlichungstag der Anmeldung: 01.08.1990
(73) Patentinhaber: WOCO Franz-Josef Wolf & Co., D-63628 Bad Soden-Salmünster (DE)
(72) Erfinder: Wolf, Franz Josef, D-6483 Bad Soden-Salmünster (DE); Pletsch, Hubert, D-6483 Bad Soden-Salmünster (DE)
(74) Vertreter: Jaeger, Klaus, Dr.

(56) Entgegenhaltungen:
- EP-A- 0 187 888
- EP-A- 0 317 732
- EP-A- 0 327 864
- DE-A- 3 607 051
- DE-U- 6 913 179
- JP-A- 5 237 675
- US-A- 2 214 942

## Beschreibung

Die Erfindung betrifft ein Flächenlager aus einem mit Hohlkanälen und Hohlräumen durchsetzten Band- oder Plattenmaterial aus Gummi. Die Hohlräume und Hohlkanäle liegen alle in einer einzigen, zur Hauptfläche des Lagers zumindest im wesentlichen parallelen oder formkomplementären Fläche.

Elastische Flächenlager dieser Art dienen allgemein der Abfederung relativ großer Massen, z.B. im Matratzen- und Maschinenbau, wobei insbesondere die weiche, geräuscharme Abfederung von Antriebsaggregaten und Motoren von Kraftfahrzeugen von Interesse ist.

Schwierigkeiten bereitet seit je her das Erzielen einer guten Kombination der Effekte einer weichen Federung, d.h. einer flachen Federkennlinie, einer möglichst langen Standzeit und einer guten akustischen Entkopplung, da einerseits der verwendete Werkstoff nicht zu hart und andererseits aber die mechanische Belastbarkeit und Strapazierfähigkeit nicht zu gering sein sollte. Einen weiteren wirtschaftlichen Aspekt stellt zudem der fertigungstechnische Aufwand dar.

Die früher verwendeten massiven aus relativ weichen Werkstoffen bestehenden Elastomerpuffer, bei denen eine rasche Materialermüdung zu verzeichnen war, sind heutzutage weitgehend durch Lager ersetzt, die zur Verminderung der Materialbelastung von Hohlkanälen und Hohlräumen durchsetzt sind. Die Hohlräume nehmen das beim Belasten des Lagers verdrängte Elastomermaterial auf, während die Hohlkanäle der Verbindung der Hohlräume dienen, wodurch zwischen diesen ein Druckausgleich ermöglicht wird.

Im allgemeinen sind Flächenlager beim bestimmungsgemäßen Gebrauch pro Flächenheit nur relativ geringen Belastungen ausgesetzt. Sobald jedoch stärkere Beanspruchungen auftreten, knicken die Hohlraumwände ein (Knickeffekt), wodurch die Rückstellkraft weitgehend verloren geht. Die Federkennlinie weist dann einen horizontalen bzw. meist abfallenden Verlauf auf. Sobald die vorhandenen Hohlräume vollständig zusammengedrückt sind, geht der flache Proportionalitätsbereich schnell in den Progressionsbereich mit einer steil ansteigenden Kennlinie über. Das Lager zeigt dann das typische, hier unerwünschte, Verhalten eines massiven Elastomerpuffers.

Lager, deren Hohlräume und Kanäle mit einer Flüssigkeit gefüllt sind, werden als Dämpfer bezeichnet. Ein derartiges Lager, deren Hohlräume mit einer Dämpfungsflüssigkeit gefüllt sind, wodurch die Wirkung eines hydraulischen Flächendämpfers erreicht wird, ist aus der japanischen Offenlegungsschrift JP-A-52-37675 bekannt, und wird in der bekannten Form u.a. als Prallwand oder Gleisträger verwendet. Die Hohlräume sind bei diesem Flächendämpfer als stehende Zylinder ausgebildet, d.h. die Zylinderachsen verlaufen in Richtung des Auflastvektors. Diese Zylinderhohlräume stehend bei der bandartigen Ausführungsform durch lineare Drosselkanäle bzw. bei der flächigen Ausgestaltung durch ein hexagonales Drosselkanalnetz, d.h. jeder Hohlzylinder wird von drei Kanälen durchsetzt, miteinander in Verbindung.

Eine derartige Verbindung zwischen den Hohlräumen ermöglicht das Überströmen der Dämpfungsflüssigkeit aus den belasteten Hohlräumen in die un- und/oder weniger belasteten Hohlräume, die dadurch aufgrund der Elastizität des Lagermaterials aufgeweitet werden, wodurch die Materialbelastung wegen der Herabsetzung der inhomogenen Spannungskonzentration reduziert wird.

Nachteilig an derartigen Lagern ist, daß die rundherum geschlossenen flüssigkeitsgefüllten und daher federversteiften Dämpfer auf hochfrequente Kurzhubschwingungen nicht ansprechen und damit relativ geräuschvoll arbeiten, und daß aufgrund der u.a. durch die engen Drosselkanälen bedingte Trägheit, die mit einer starken Elastomerpressung und somit einem relativ steilen Anstieg der Federkennlinie einhergeht, eine wünschenswerte weiche Abfederung nicht im erforderlichen Maße möglich ist, es sei denn, es würde ein weicherer Werkstoff verwendet, was aber wiederum die Standzeit erheblich verkürzen würde.

Von Nachteil ist weiterhin, daß die Herstellung derartiger Lager aufgrund der Klebeverbund-Schichtstrukturen zeit-, produktions- und personalaufwendig und damit kostenintensiv erfolgen muß.

Aufgabe der Erfindung ist es daher, ein Flächenlager aus einem strapazierfähigen, relativ festen, elastischen Werkstoff zu schaffen, das geeignet ist, große Lasten bestimmungsgemäß abzufedern, und daß trotzdem eine über einen weiten Rückstellbereich flach verlaufende Federkennlinie aufweist, d.h. eine weiche Federcharakteristik besitzt, daß weiterhin eine gute akustische Entkopplung und bei unverminderter Funktionsleistung hohe Standzeiten ermöglicht und außerdem einfach, schnell und kostengünstig hergestellt werden kann.

Diese Aufgabe wird durch ein Flächenlager gemäß der Lehre des Anspruchs 1 gelöst, daß dadurch gekennzeichnet ist, daß jeder Hohlraum von jeweils nur einem einzigen Hohlkanal durchsetzt ist und daß die Hohlkanäle zumindest einseitig offen sind und einen lichten Querschnitt aufweisen, dessen Flächeninhalt mindestens ein Viertel so groß ist wie die größte Querschnittsfläche des nächstliegenden, von diesem Hohlkanal durchsetzten Hohlraumes.

Das erfindungsgemäße Flächenlager besteht aus einem Gummiband oder einer Gummiplatte, worin gleichmäßig verteilt Hohlräume und Hohlkanäle ausgebildet sind, die alle in einer einzigen zur Hauptfläche des Flächenlagers zumindest im wesentlichen parallelen oder formkomplementäre Fläche liegen. Jeder Hohlraum der Gummimatrix wird dabei nur von einem einzigen der vorzugsweise gradlinig verlaufenden und zumindest einseitig offenen Hohlkanäle durchsetzt. In den bevorzugten Ausführungsformen sind die Hohlräume kugelförmig oder rotationsellipsoid ausgestaltet, während die Hohlkanäle vorzugsweise eine kreiszylindrische Form besitzen. Insgesamt sind sämtliche Hohlräume und Hohlkanäle derart angeordnet, daß jeweils der Mittelpunkt eines kugelförmigen Hohlraums auf der Mittelachse des diesen Hohlraum schneidenden Hohlkanals liegt.

Wesentlich ist dabei, daß sich die sich weder schneidenden noch berührenden Hohlkanäle einen lichten Querschnitt aufweisen, dessen Flächeninhalt mindestens ein Viertel so groß ist wie die größte Querschnittsfläche des nächstliegenden, von diesem Hohlraum durchsetzten Hohlraumes.

Durch dieses Querschnittsverhältnis wird sichergestellt, daß insgesamt ein ausreichend großes Hohlvolumen im Inneren des Flächenlagers zur Verfügung steht, welches beim Zusammenpressen des Lagerkörpers das verdrängte Gummimaterial aufnehmen kann, ohne daß es zu extremen Materialbeanspruchungen kommt. Die Kanäle fungieren also nicht als Drosselkanäle, sondern stellen selbst einen Ausweichraum für das Gummimaterial dar, wodurch sich eine Aufweichung des Flächenlagers und eine flachere Federkennlinie ergibt. Durch die gleichmäßige Verteilung der Hohlräume und Kanäle in der Matrix des Flächenlagers ist der Lagerkörper trotz des bemerkenswerten Porenvolumens in seiner mechanischen Festigkeit nicht beeinträchtigt und weist selbst bei beträchtlichen Auflasten eine hohe Standzeit auf. Die bei Belastung auftretenden Verformungsspannungen, die vornehmlich die freien inneren und äußeren Oberflächen der Gummimatrix beanspruchen, werden homogen über den gesamten Lagerkörper verteilt, so daß selbst bei einem aus relativ festem und mechanisch stabilem mechanischen Werkstoff bestehenden Lager, die Federcharakteristik ausgesprochen weich ausfällt und dementsprechend die Federkennlinie einen weiten und flachen Proportionalitätsbereich aufweist und erst bei relativ hoher Last mit mäßiger Krümmung in den Progressionsbereich übergeht.

Die Hohlkanäle sind in bevorzugten Ausgestaltungen der Erfindung derart ausgerichtet, daß sie nicht-parallel zu mindestens einer oder der longitudinalen Hauptachse des Flächenmaterials verlaufen und vorzugsweise mit dieser einen Winkel von 90 oder 45° einschließen, wobei die Kanäle ein- oder beidseitig offen sind. Im Fall der nur einseitig offenen Kanäle liegen die Öffnungen vorzugsweise alternierend auf den jeweils gegenüberliegenden Seiten des Flächenmaterials.

Die Kanäle verlaufen hierbei parallel zueinander oder bilden mehrere Scharen von jeweils zueinander parallelen Kanälen, deren Mittelachsen einander schneiden, ohne daß sich die Hohlkanäle selbst schneiden oder berühren, also z.B. ein Fischgrätmuster bilden.

Alternativ können die Hohlkanäle bei einem im wesentlichen regulär polygonalen oder kreisrunden Flächenmaterial radial zum Mittelpunkt verlaufend ausgerichtet sein, wobei sie sich im Zentrum weder schneiden noch berühren und daher nur einseitig offen ausgebildet sind.

Im Zentrum des erfindungsgemäßen Flächenlagers kann weiterhin ein in Richtung der Normalen zur Hauptfläche, also in Richtung des Auflastvektors verlaufend eine durchgehende oder nach Art eines Sacklochs oder einer Nut einseitig geschlossenen Öffnung ausgebildet sein, wobei sich keiner der Hohlräume oder Hohlkanäle in diesen zentralen Kanal öffnet. Eine derartige zentrale Öffnung ermöglicht vielfältige konstruktive Möglichkeiten u.a. Befestigungsmöglichkeiten. Mittels einer durch diese Öffnung geführten Stabilisierungs- und Führungsstange kann auch eine zusätzliche seitliche Stabilisierung erzielt werden. Hierbei werden in keiner Weise die Feder- oder akustischen Eigenschaften des Lagers verringert.

Überraschend ist insgesamt auch, daß selbst bei einem relativ flachen, einschichtig mit Hohlräumen und Hohlkanälen durchsetzten Flächenlager bereits ausgesprochen gute Federeigenschaften und eine weitgehend akustische Entkopplung erzielt werden können.

Die Herstellung des erfindungsgemäßen Flächenlagers erfolgt durch Formpressen oder Spritzgießen von Gummimischungen in einem mit Formkernen durchsetzten Formnest eines Formwerkzeuges. Die wiederverwendbaren z.B. aus Stahl bestehenden Formkerne werden nach dem Verfestigen der Elastomermasse zusammen mit dem Formteil aus dem Formnest herausgenommen, d.h. das Formteil wird entformt. Anschließend werden die stabförmigen, in regelmäßigen Abständen mit Verdickungen versehenen Formkerne einzeln oder in Gruppen seitlich aus dem Formteil herausgezogen. Das erhaltene Flächenlager ist danach sofort einsatzfähig, wobei als Verwendungszweck insbesondere die Flächenlagerung von Motoren oder Antriebsaggregaten von Kraftfahrzeugen vorgesehen ist.

Die Erfindung ist im folgenden anhand der Figuren 1 bis 6 näher erläutert.

Hierbei zeigen:
Fig. 1 in schematischer Darstellung einen horizontalen Schnitt durch ein erfindungsgemäßes Flächenlager;
Fig. 2 das Lager nach Fig. 1 in Seitenansicht;
Fig. 3 einen vertikalen Schnitt nach III-III in Fig. 1;
Fig. 4 in schematischer Darstellung einen horizontalen Schnitt durch eine zweite Ausführungsform des erfindungsgemäßen Lagers;
Fig. 5 in schematischer Darstellung einen horizontalen Schnitt durch eine dritte Ausführungsform des erfindungsgemäßen Lagers; und
Fig. 6 einen vertikalen Schnitt nach VI-VI in Fig. 5.

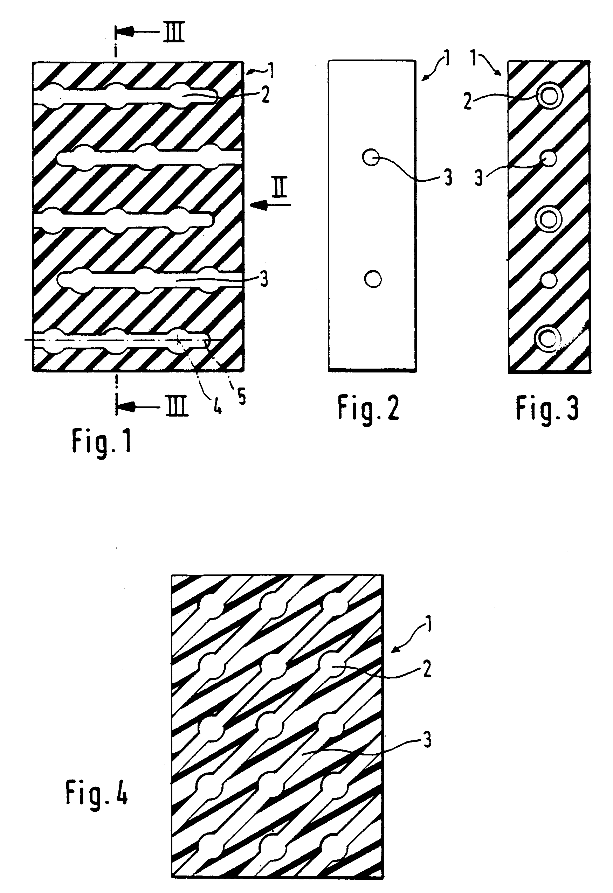

In dem in den Fig. 1 bis 3 gezeigten Flächenlager 1 sind die in der Gummimatrix ausgebildeten Hohlräume 2 und die Hohlkanäle 3 derart verteilt angeordnet, daß sie, wie insbesondere in den Fig. 2 und 3 zu erkennen ist, in einer einzigen Ebene bzw. zur Hauptfläche des Flächenmaterials parallelen oder formkomplementären Fläche liegen.

Die Kanäle 3 verlaufen im Winkel von 90° zur Längsachse des Lagers, die in der Zeichnung von oben nach unten ausgerichtet ist, parallel zueinander und sind einseitig und alternierend zu den gegenüberliegenden Seiten des Lagerkörpers 1 geöffnet. Vorzugsweise ist der Abstand zwischen den einzelnen Kanälen 3 jeweils gleich groß. Jeder Kanal 3 durchsetzt mehrere Hohlräume 2, die vorzugsweise gleiche Abstände voneinander aufweisen, während umgekehrt jeder Hohlraum 2 nur von einem einzigen Kanal 3 durchsetzt ist. Die Querschnittsfläche der kreiszylinderischen Kanäle 3 beträgt mindestens ein Viertel der größten Querschnittsfläche der kugelförmigen Hohlräume 2, wobei die Mittelpunkte 4 der Hohlräume 2 auf der Mittelachse 5 des jeweiligen Kanals 3 liegt.

Das in Fig. 4 gezeigte Flächenlager 1 weist im Gegensatz dazu Hohlkanäle 3 auf, die im Winkel von 45° zur Längsachse des Lagers verlaufen und beidseitig geöffnet sind.

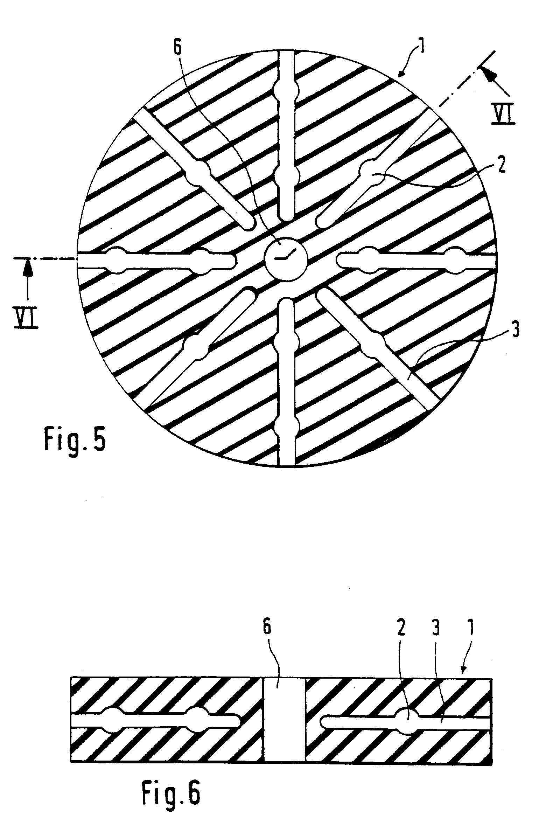

Das in den Fig. 5 und 6 gezeigte erfindungsgemäße Flächenlager 1 besteht aus einem kreisrunden Flächenmaterial, in dem die Hohlkanäle 3 wiederum nur einseitig offen ausgebildet sind und radial zum Mittelpunkt hin verlaufen. Sie sind jedoch nur so lang, daß sie nicht ganz an die im Zentrum vorhandene, in Richtung der Normalen zur Hauptfläche verlaufenden Öffnung 6 heranreichen, d.h. sich also nicht in diese öffnen. Der zentrale Lochkanal 6 ist beidseitig offen, durchläuft also das Flächenlager 1 in seiner gesamten Dicke.

Die in den Fig. gezeigten erfindungsgemäßen Flächenlager 1 werden bei bestimmungsgemäßem Gebrauch in Richtung der Normalen zur Hauptfläche belastet, wobei das verdrängte Elastomermaterial von den Hohlräumen 2 und den Kanälen 3 bzw. auch 6 aufgenommen wird. Hierbei wird eine weiche, knickeffektfreie Federung und eine gute akustische Entkopplung erzielt. Die im Fahrzeugbau an Motorflächenlager gestellten Anforderungen werden dabei in allen Punkten erfüllt.

## Patentansprüche

1. Flächenlager (1) aus einem mit Hohlkanälen (3) und Hohlräumen (2) dergestalt durchsetzten Band- oder Plattenmaterial aus Gummi, daß alle in der Gummimatrix ausgebildeten Hohlkanäle (3) und Hohlräume (2) in einer einzigen, zur Hauptfläche des Flächenmaterials, deren Normale in Richtung des Auflastvektors verläuft, zumindest im wesentlichen parallelen oder zu dieser formkomplementären Fläche liegen, dadurch **gekennzeichnet**, daß
jeder Hohlraum von jeweils nur einem einzigen Hohlkanal durchsetzt ist und daß die Hohlkanäle (3) zumindest einseitig offen sind und einen lichten Querschnitt aufweisen, dessen Flächeninhalt mindestens 1/4 so groß ist wie die größte Querschnittsfläche des nächstliegenden, von diesem Hohlkanal (3) durchsetzten Hohlraumes (2).

2. Flächenlager nach Anspruch 1,
dadurch **gekennzeichnet**,
daß die Hohlräume Kugelgestalt haben, daß die Hohlkanäle kreiszylindrisch konfiguriert sind, und daß jeweils der Mittelpunkt eines kugelförmigen Hohlraumes auf der Mittelachse des diesen Hohlraum schneidenden Hohlkanals liegt.

3. Flächenlager nach einem der Ansprüche 1 oder 2,
dadurch **gekennzeichnet**,
daß die Hohlkanäle in einem Flächenmaterial mit mindestens einer longitudinalen Hauptachse nicht-parallel zu dieser oder einer dieser Längsachsen des Flächenmaterials verlaufend ausgerichtet sind, insbesondere mit dieser Längsachse einen Winkel von 90° oder 45° einschließen.

4. Flächenlager nach einem der Ansprüche 1 bis 3,
dadurch **gekennzeichnet**,
daß alle Hohlkanäle parallel zueinander verlaufend ausgerichtet sind.

5. Flächenlager nach einem der Ansprüche 1 bis 3,
dadurch **gekennzeichnet**,
daß in der Gummimatrix mehrere Scharen untereinander jeweils parallel zueinander verlaufend ausgerichteter Hohlkanäle ausgebildet sind, deren Mittelachsen einander schneiden, ohne daß sich die Hohlkanäle selbst schneiden.

6. Flächenlager nach einem der Ansprüche 1 bis 5,
dadurch **gekennzeichnet**,
daß alle in der Gummimatrix ausgebildeten Hohlkanäle nur einseitig offen sind, und zwar dergestalt, daß die offenen Seiten der Hohlkanäle alternierend auf jeweils anderen Seiten des Flächenmaterials liegen.

7. Flächenlager nach einem der Ansprüche 1 oder 2,
dadurch **gekennzeichnet**,
daß insbesondere bei einem zumindest im wesentlichen regulär polygonalen oder kreisrunden Flächenmaterial alle Hohlkanäle nur einseitig offen ausgebildet und radial zum Mittelpunkt des Flächenmaterials verlaufend ausgerichtet sind, ohne sich im Zentrum dieses Flächenmaterials zu schneiden oder auch nur zu berühren.

8. Flächenlager nach einem der Ansprüche 1 bis 7,
dadurch **gekennzeichnet**,
daß im Zentrum des Flächenmaterials in Richtung der Normalen der Hauptfläche verlaufend eine Öffnung ausgebildet ist, die durchgehend oder nach Art eines Sackloches oder einer Nut einseitig geschlossen sein kann.

9. Verfahren zur Herstellung von Flächenlagern nach einem der Ansprüche 1 bis 8 durch Formpressen oder Spritzgießen von Gummimischungen in einem mit Formkernen durchsetzten Formnest eines Formwerkzeuges,
dadurch **gekennzeichnet**,
daß das mit wiederverwendbaren Formkernen durchsetzte Formteil zusammen mit den Formkernen zunächst vollständig entformt wird, und daß erst dann die Formkerne einzeln oder in Gruppen seitlich gezogen werden, wobei das einsatzfertige Flächenlager erhalten wird.

10. Verwendung des Flächenlagers nach einem der Ansprüche 1 bis 8 bzw. eines nach Anspruch 9 hergestellten Flächenlagers zur Flächenlagerung des Motors oder des Antriebsaggregates eines Kraftfahrzeuges.

## Claims

1. A planar bearing (1) made from rubber strip or sheet material which is interspersed with hollow channels (3) and hollow spaces (2) such that all the hollow channels (3) and hollow spaces (2) which are arranged in the rubber matrix are disposed in a single plane which is substantially parallel to or as regards its shape is complementary to the main plane of the planar material whose normal extends in the direction of the loading vector,
**characterized** in that,
each hollow space is interspersed by a single hollow channel only and that the hollow channels (3) are open at least unilaterally and have a cross-section whose surface area is at least 1/4 of the largest cross-sectional area of the adjacent hollow space (2) which is interspersed by this hollow channel (3).

2. A planar bearing according to claim 1,
**characterized** in that,
the hollow spaces are spherically shaped, the hollow channels are configured as round cylinders and in that the centre point of each spherically shaped hollow space is disposed on the centre line of that hollow channel which intersects it.

3. A planar bearing according to one of the claims 1 or 2,
**characterized** in that,
the hollow channels are arranged in a planar material having at least one longitudinal main axis and disposed non-parallel thereto or to one of these longitudinal axes of the planar material and, in particular, include with this longitudinal axis an angle of 90° or 45°.

4. A planar bearing according to one of the claims 1 to 3,
**characterized** in that,
all of the channels are arranged parallel to each other.

5. A planar bearing according to one of the claims 1 to 3,
**characterized** in that,
a number of groups of parallel hollow channels is arranged in the rubber matrix, the longitudinal axes thereof intersecting one another without, however, the hollow channels intersecting each other.

6. A planar bearing according to one of the claims 1 to 5,
**characterized** in that,
all of the hollow channels which are arranged in the rubber matrix are open unilaterally and, specifically, in that the open ends of the hollow channels are disposed alternately on opposite sides of the planar material.

7. A planar bearing according to one of the claims 1 or 2,
**characterized** in that,
in particular in a planar material having a substantially regular polygonal or circular cross-section all of the hollow channels are open unilaterally and arranged to converge towards the centre of the planar material without intersecting or contacting each other at the centre thereof.

8. A planar bearing according to one of the claims 1 to 7,
**characterized** in that,
at the centre of the planar material there is arranged an aperture which extends in a direction normal to the main plane, and which is open throughout or closed at one end thereof in the manner of a groove or cul-de-sac.

9. A process of manufacturing planar bearings according to one of the claims 1 to 8 by press or injection moulding of rubber compositions in a moulding tool provided with a moulding cavity which is interspersed with moulding cores,
**characterized** in that,
the mould part which is interspersed with the reusable moulding cores is first ejected completely from the moulding tool and in that only thereafter the moulding cores are extracted laterally individually or in groups, whereby the ready for use planar bearing is obtained.

10. Use of a planar bearing according to one of the claims 1 to 8 or manufactured according to claim 9 for planar mounting of a motor or drive assembly of a motor vehicle.

## Revendications

1. Support plat (1) fabriqué dans une matière en caoutchouc stratifiée en bandes ou en feuilles et traversée par des canaux creux (3) et des espaces vides (2) de telle sorte que tous les canaux creux (3) et les espaces vides (2) congrus dans la matrice en caoutchouc se trouvent dans une seule surface parallèle, au moins pour l'essentiel, à la surface principale de la matière plate, surface dont la normale va dans le sens du vecteur de charge, ou dans une seule surface complémentaire de sa forme, caractérisé en ce que chaque espace vide n'est traversé à chaque fois que par un seul canal creux et en ce que les canaux creux (3) sont ouverts au moins unilatéralement et présentent une dimension intérieure dont la superficie est au moins un quart aussi grande que l'aire la plus importante de la section de l'espace vide le plus proche (2) qui est traversé par ce canal creux (3).

2. Support plat selon la revendication 1, caractérisé en ce que les espaces vides ont une forme de sphère, en ce que les canaux creux ont une configuration cylindrique circulaire et en ce qu'à chaque fois le point central d'un espace vide sphérique se trouve sur la ligne médiane du canal creux coupant cet espace vide.

3. Support plat selon l'une des revendications 1 ou 2, caractérisé en ce que les canaux creux sont alignés dans une matière plate avec au moins un axe principal longitudinal, de façon non parallèle à celui-ci ou à l'un de ces axes longitudinaux de la matière plate et en ce qu'ils incluent en particulier un angle de 90° ou de 45° par rapport à cet axe longitudinal.

4. Support plat selon l'une des revendications 1 à 3, caractérisé en ce que tous les canaux creux sont alignés de façon parallèle entre eux.

5. Support plat selon l'une des revendications 1 à 3, caractérisé en ce que plusieurs systèmes de canaux creux alignés entre eux et à chaque fois parallèles les uns par rapport aux autres sont conçus dans la matrice en caoutchouc, canaux creux dont les lignes médianes se coupent, sans qu'ils se coupent eux-mêmes.

6. Support plat selon l'une des revendications 1 à 5, caractérisé en ce que tous les canaux creux conçus dans la matrice en caoutchouc ne sont ouverts qu'unilatéralement et de telle sorte que les faces ouvertes des canaux creux sont disposées en alternance sur à chaque fois d'autres faces de la matière plate.

7. Support plat selon l'une des revendications 1 à 5, caractérisé en ce qu'en particulier pour une matière plate polygonale de façon régulière, au moins pour l'essentiel, ou circulaire, tous les canaux creux ne sont conçus qu'avec une ouverture unilatérale et de façon radiale par rapport au point central de la matière plate, sans se couper ou seulement se toucher au centre de cette matière plate.

8. Support plat selon l'une des revendications 1 à 7, caractérisé en ce qu'une ouverture qui peut être continue ou fermée unilatéralement à la manière d'un trou borgne ou d'une rainure, est conçue au centre de la matière plate, dans le sens de la normale à la surface principale.

9. Procédé de fabrication de supports plats selon l'une des revendications 1 à 8, par moulage par compression ou par injection de mélanges de caoutchouc dans une empreinte de moule d'un outil de moulage traversée par des noyaux de moule, caractérisé en ce que le préformé traversé par des noyaux de moule réutilisables est d'abord entièrement démoulé avec les noyaux de moule et en ce que ce n'est qu'ensuite que les noyaux de moule sont extraits latéralement un par un ou en groupe, le support plat prêt à l'emploi étant obtenu.

10. Utilisation du support plat selon l'une des revendications 1 à 8 ou d'un support plat fabriqué selon la revendication 9, en vue de l'installation du moteur ou du mécanisme d'entraînement d'un véhicule automobile sur un support plat.
